Europäisches Patentamt

European Patent Office

Office européen des brevets

(19)

(11) Veröffentlichungsnummer : **0 347 842 B1**

(12) **EUROPÄISCHE PATENTSCHRIFT**

(45) Veröffentlichungstag der Patentschrift :
**29.07.92 Patentblatt 92/31**

(51) Int. Cl.$^5$ : **B60N 2/44**

(21) Anmeldenummer : **89111214.6**

(22) Anmeldetag : **20.06.89**

(54) **Fahrzeugsitz mit einem Rückenlehnenrahmen.**

(30) Priorität : **22.06.88 DE 3821554**

(43) Veröffentlichungstag der Anmeldung :
**27.12.89 Patentblatt 89/52**

(45) Bekanntmachung des Hinweises auf die
Patenterteilung :
**29.07.92 Patentblatt 92/31**

(84) Benannte Vertragsstaaten :
**DE ES FR GB IT SE**

(56) Entgegenhaltungen :
**EP-A- 0 102 708**
**FR-A- 1 382 039**
**FR-A- 2 306 659**

(73) Patentinhaber : **GEBR. ISRINGHAUSEN**
**An der Bega 58**
**W-4920 Lemgo 1 (DE)**

(72) Erfinder : **Granzow, Manfred, Dipl.-Ing.**
**Plass 7**
**W-4926 Dörentrup (DE)**
Erfinder : **Mischer, Hans-Peter, Dipl.-Ing.**
**Meinberger Strasse 15**
**W-4934 Horn-Bad Meinberg (DE)**
Erfinder : **Süss, Christian**
**Stiftweg 41**
**W-4902 Bad Salzuflen (DE)**

(74) Vertreter : **Lange, Gerd, Dipl.-Ing.**
**Nachtigallenweg 8 Postfach 2425**
**W-4950 Minden (DE)**

EP 0 347 842 B1

Jouve, 18, rue Saint-Denis, 75001 PARIS

## Beschreibung

Die Erfindung betrifft einen Fahrzeugsitz mit einem Rückenlehnenrahmen, der seitlich angeordnete und im Querschnitt im wesentlichen U-förmig offene Seitenholme aufweist, deren geschlossener Rücken der Sitzbenutzer-Oberseite des Sitzes zugewandt ist.

Rahmenkonstruktionen mit Seitenholmen dieser Art sind aus der EP-A-102 708 bekannt. Sie werden in erster Linie mit geringen Wandstärken aus Gründen der Gewichtsreduzierung ausgeführt. Deshalb sind besondere Maßnahmen erforderlich, um derartige Seitenholm-Hohlprofile stabil und verwindungssteif zu machen. Dies gilt insbesondere für Rückenlehnenrahmen an deren oberen Ende zusätzlich auch ein Sicherheitsgurt angreift bzw. zu befestigen ist.

Als Maßnahme für das Erreichen der gewünschten Belastbarkeit der Seitenholme ist es aus der EP-A-102 708 bekannt, den U-förmigen Seitenholmen zusätzliche Randprofilierungen zu geben, die das U-Querschnittsprofil zu einer Art W-Querschnittsprofil erweitern. Solche zusätzlichen Randprofilierungen erhöhen das Widerstandsmoment der Seitenholme jedoch nur in einer Hauptbelastungsrichtung.

Auch ist es bekannt, die Seitenholme von Rückenlehnenrahmen schräg zur Sitzlängsrichtung anzuordnen, so daß deren Hauptbelastungsrichtung entsprechend dem größten Widerstandsmoment mit der Angriffsrichtung des schräg auf den Seitenholm zulaufenden Sicherheitgurtes übereinstimmt (vergl. DE-A-36 24 295). Daraus resultiert dann jedoch ein größeres Bauvolumen der an sich besonders flach gewünschten Rückenlehne und ein kleineres Widerstandsmoment in Richtung der in Sitzlängsrichtung auf die Rückenlehne einwirkenden Kräfte, die am unteren Ende der Seitenholme, d.h. an deren Basis im Bereich der Anlenkung des Rückenlehnenrahmens an dem Sitzunterbau und/oder Sitzrahmen besonders groß sind.

Aufgabe der Erfindung ist es, eine Konstruktion für die Seitenholme des Rücklehnenrahmens vorzuschlagen, die hohe Kräfte aus allen wesentlichen Kraftangriffsrichtungen aufnehmen kann, dabei zugleich verwindungssteif ist und dennoch nicht ein größeres Bauvolumen der in flacher Bauweise gewünschten Rückenlehne erfordert.

Diese.Aufgabe wird erfindungsgemäß dadurch gelöst, daß der Seitenholm als Vielflächenkörper mit zueinander verschieden geneigt angeordneten Wandflächen ausgebildet ist und eine Schrägfläche aufweist, die ausgehend vom Rücken des Seitenholmszur Mitte des Sitzes geneigt angeordnet ist, wobei die über den Rükken gemessene Breite des Seitenholms ausgehend von dem unteren Ende des Seitenholms in Richtung des Kopfendes des Rückenlehnenrahmens im wesentlichen entsprechend der Außenkontur der Rückenlehne abnimmt und die über die Seitenwände gemessene Bautiefe des Seitenholms in Richtung des unteren Endes des Seitenholms zunimmt.

Eine zweckmäßige Ausgestaltung der Erfindung sieht vor, daß an dem unteren Ende der Seitenholme eines Rückenlehnenrahmens, d.h. an deren Basis, die Schwenkachse für Neigungsverstellung der Rückenlehne nach vorne in Richtung des Sitzbenutzers versetzt und somit unmittelbar benachbart zum Rücken der Seitenholme angeordnet ist, wohingegen an der Basis die Anlenkpunkte der Neigungsverstellvorrichtung versetzt nach hinten und somit unmittelbar benachbart zur offenen Seite der Seitenholme positioniert sind. Hierdurch ergibt sich eine besonders wirksame und alle Kräfte gut beherrschende verstellbare Anlenkung der Seitenholme des Rückenlehnenrahmens an dem Sitzunterbau oder dem Sitzrahmen.

Durch die erfindungsgemäße Konstruktion ist es möglich, auch weiterhin den inneren Hohlraum der Seitenholme zur Aufnahme von Verstellelementen des Sitzes zu nutzen (vergl. hierzu EP-A 102 708), und als wesentlicher Vorteil wird erreicht, daß durch die angeformten Schrägflächen sowie durch die entsprechend der Außenkontur der Rückenlehne abnehmende Breite der Seitenholme als auch durch die genannte Bautiefenveränderung bis hin zur tiefen und breiten Basis der Seitenholme ein Vielflächenkörper mit zueinander verschieden geneigt angeordneten Wandflächen gebildet ist, der große Kräfte aus allen wesentlichen Kraftangriffsrichtungen verwindungssteif aufnehmen kann.

Durch eine integrierte Unterbringung der Verstellelemente des Sitzes, z.B. eines Verrastungselementes, eines Verstellmotors o. dergl., in dem Hohlraum der Seitenholme und deren gleichzeitige Befestigung an beiden Seitenwänden der Seitenholme wird zudem eine zusätzlich Aussteifung des Seitenholms erreicht.

Die für eine solche Nutzung des Hohlraums erforderlichen größeren Rückenbreiten der Seitenholme sind für den Sitzkomfort nicht störend, da die Seitenholme ausgehend vom Rücken eine zur Mitte des Sitzes geneigt angeordnete Schrägfläche aufweisen, die für den Körper des Sitzbenutzers die Rückenlehne mulden und zugleich den Körper des Sitzbenutzers seitlich abstützen.

Der vorbeschriebene Vielflächenkörper als Seitenholm für Fahrzeugsitze ist ein neues Konstruktionsprinzip, das bewußt die Verwendung von extrodierten, gekanteten oder gewalzten Stangenprofilen für die Seitenholme von Rückenlehnenrahmen vermeidet. Dennoch läßt sich der Vielflächenkörper kostengünstig aus Blech mittels eines Formwerkzeuges herstellen, wobei der Leichtbauweise durch entsprechende Optimierung der Blechwanddicken Rechnung getragen werden kann.

Nachfolgend wird ein Ausführungsbeispiel der Erfindung anhand der Zeichnungen näher beschrieben. Es zeigen:

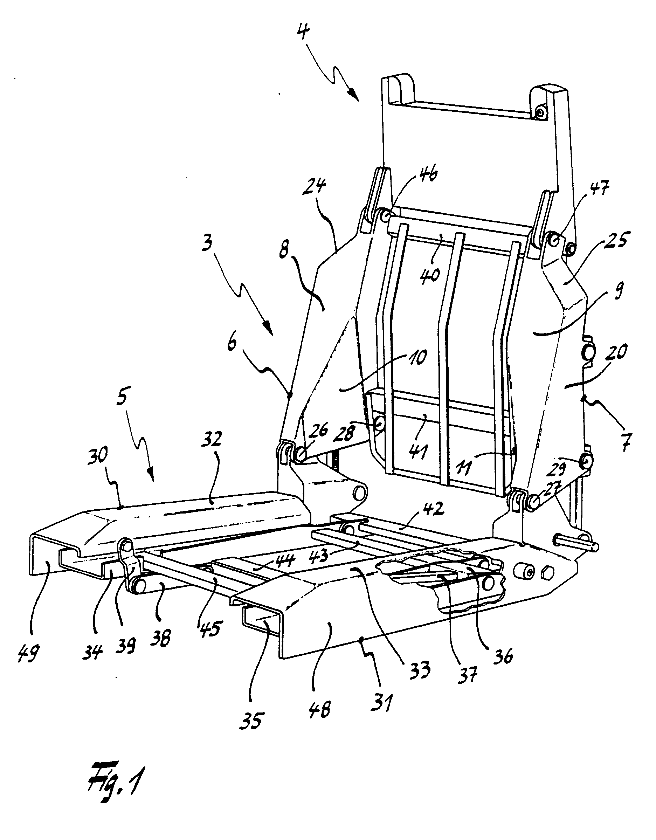

Fig. 1 in perspektivischer Darstellung schräg von vorn einen erfindungsgemäßen Fahrzeugsitz,

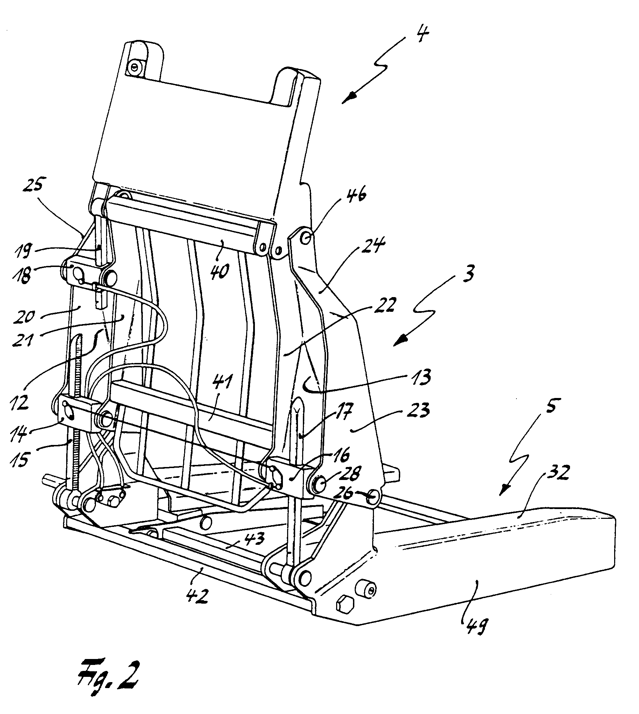

Fig. 2 den Sitz nach Fig. 1 schräg von hinten.

Der dargestellte Fahrzeugsitz zeigt die Metallkonstruktion ohne Polsterteile und Bezugstoff. Sie besteht im wesentlichen aus einem Rückenlehnenrahmen 3 mit verstellbarem Kopfteil 4 und einem Sitzrahmen 5.

Der Rückenlehnenrahmen 3 besitzt zwei Seitenholme 6 und 7, die jeweils einen breiten, geschlossenen Rücken 8 und 9 mit einer zur Mitte des Sitzes geneigt angeordneten Schrägfläche 10 und 11 aufweisen.

Dadurch entsteht ein von hinten zugänglicher innerer Profilraum 12 und 13, der zur integrierten Unterbringung konstruktiver Verstellelemente des Sitzes in dem Profilraum genutzt werden kann.

Bei dem dargestellten Ausführungsbeispiel sind in dem inneren Profilraum Verstellelemente in Form von Stangen-Klemmvorrichtungen 14, 15 bzw. 16,17 bzw. 18,19 vorgesehen. Erkennbar ist, daß die Klemmvorrichtungen jeweils beidseitig, d.h. an beiden Seitenwänden 20, 21 bzw. 22, 23 der Seitenholme befestigt sind und somit eine zusätzliche Aussteifung der Seitenholme 6 und 7 gewährleisten.

Die äußeren Seitenwände 20 und 23 der Seitenholme 6 und 7 sind entsprechend der Außenkontur der Rükkenlehne mit Schulterflächen 24 und 25 versehen und - wie am besten an den außenliegenden Seitenfläche 20 und 23 erkennbar - nimmt die zwischen dem Rücken und der offenen Seite gemessene Bautiefe der Seitenholme 6 und 7 in Richtung des unteren Endes der Seitenholme zu.

Im Ergebnis sind somit die dargestellten Seitenholme 6 und 7 ein "Vielflächenkörper", dessen einzelne Flächen (nämlich die Rückenfläche 8,9, die Schrägflächen 10, 11, die Seitenwände 20,21 bzw. 22, 23 und die Schulterflächen 24, 25) jeweils eine eigene und voneinander verschiedene Anordnung im Raum haben, so daß äußerst verwindungssteife Seitenholme gebildet sind, die große Kräfte aus allen wesentlichen Kraftangriffsrichtungen aufnehmen können.

Die Schwenkachsen 26 und 27 für die Neigungsverstellung der Rückenlehne befinden sich an dem unteren Ende der Seitenholme 6 und 7 benachbart zu der jeweiligen Rückenfläche 8 und 9 der Seitenholme. Diese Schwenkachsen sind bewußt nach vorne in Richtung des Sitzbenutzers versetzt angeordnet und wirken mit den nach hinten versetzt angeordneten Anlenkachsen 28 und 29 zusammen, die der Anlenkung bzw. Befestigung der Stangen-Klemmvorrichtungen 14 und 16 an den Seitenholmen dienen. Somit liegen die Achsen 26, 27 und 28, 29 am unteren Basisende der Seitenholme relativ weit auseinander und die an dem Rücken des Fahrzeugsitzes angreifenden Kräfte lassen sich besonders gut über die Seitenholme 6 und 7 in den Sitzunterbau bzw. - wie in dem dargestellten Fall - in den Sitzrahmen 5 einleiten.

Auch der Sitzrahmen weist Seitenholme 30 und 31 auf, die eine breite Rückenfläche 32 und 33 derart besitzen, daß in den von den Seitenholmen umschlossenen Hohlraum, d.h. in ihrem inneren Profilraum konstruktive Verstellelemente des Sitzes anzuordnen sind.

Bei dem dargestellten Ausführungsbeispiel sind unterhalb der Seitenholme 30 und 31 des Sitzrahmens jeweils ein Unterholm 34 und 35 angeordnet, die mit den Seitenholmen einen Hohlraum umschließen, in dem das Stangen-Klemmelement 36, 37 angeordnet ist. Dieses Stangen-Klemmelement dient dazu, mittels der Lenker 38, 39 die vorderen Enden der Seitenholme 30, 31 von den Unterholmen 34, 35 in vertikaler Richtung abzuspreizen, um so eine einfache Neigungsverstellung des Sitz rahmens 5 relativ zu den Unterholmen zu ermöglichen.

In der üblichen Weise sind die Seitenholme sowohl des Rückenlehnenrahmens als auch des Sitzrahmens durch Querstreben 40 - 45 miteinander verbunden. An Stelle solcher Querstreben können auch andere Querverbindungen, z.B. in Form von Querblechen verwendet werden.

An dem oberen Ende des Rückenlehnenrahmens 3 ist ein um die Achsen 46 und 47 verschwenkbares Kopfteil 4 befestigt, das mittels des Stangen-Klemmelementes 18, 19 in seiner Neigung relativ zum Rückenlehnenrahmen 3 verstellbar ist. Auch dieses Stangen-Klemmelement ist innerhalb des inneren Profilraumes der Seitenholme des Rückenlehnenrahmens angeordnet, so daß es kein zusätzliches Einbauvolumen erfordert und für seine Funktionsfähigkeit von allen Polstermaterialien des Sitzes (nicht dargestellt) freigehalten ist.

Alle vorgenannten Stangen-Klemmelemente sind in ihrem grundsätzlichen Funktionsaufbau aus der DE-OS 34 20 103 bekannt und werden mittels Bowdenzügen betätigt, deren Betätigungsvorrichtungen (nicht dargestellt) an einer der außen liegenden Seitenwände 48 oder 49 der Seitenholme 30, 31 des Sitzrahmens 5 zu befestigen sind, die die Unterholme 34, 35 im wesentlichen vollständig von außen übergreifen, so daß eine Verletzungsgefahr beim Handhaben der Betätigungsvorrichtungen der Bowdenzüge nicht besteht.

**Patentansprüche**

1. Fahrzeugsitz

– mit einem Rückenlehnenrahmen,

– der seitlich angeordnete und im Querschnitt im wesentlichen U-förmig offene Seitenholme (6,7) aufweist,

– deren geschlossener Rücken (8,9) dem Sitzbenutzer des Sitzes zugewandt ist,

dadurch gekennzeichnet,

– daß der Seitenholm (6, 7) als Vielflächenkörper mit zueinander verschieden geneigt angeordneten Wandflächen (8,9; 10,11; 20,21 bzw. 22, 23; 24, 25) ausgebildet ist,

– mit einer Schrägfläche (10, 11), die ausgehend vom Rücken des Seitenholms zur Mitte der Rückenlehne geneigt angeordnet ist,

– mit einer über den Rücken (8,9) gemessenen Gesamtbreite des Seitenholms (6,7), die ausgehend von dem unteren Ende des Seitenholms (6,7) in Richtung des Kopfendes des Rückenlehnenrahmens im wesentlichen entsprechend der Außenkontur der Rückenlehne abnimmt,

– und mit einer über die Seitenwände (20, 21 bzw. 22, 23) gemessenen Bautiefe des Seitenholms, die in Richtung des unteren Endes des Seitenholms zunimmt.

2. Fahrzeugsitz nach Anspruch 1,

dadurch gekennzeichnet,

– daß die Schwenkachse (26, 27) für die Neigungsverstellung der Rückenlehne an dem unteren Ende der Seitenholme (6, 7) und benachbart zum Rücken der Seitenholme angeordnet ist,

– und daß die Anlenkpunkte (28, 29) der Neigungsverstellvorrichtung an den Seitenholmen (6, 7) an dem unteren Ende der Seitenholme und benachbart zur offenen Seite der Seitenholme positioniert sind.

## Claims

1. Vehicle seat

– with a backrest frame

– which has side braces (6, 7) located on the side and open in cross section essentially in a U-shape

– the closed backs (8, 9) of the side braces facing towards the user of the seat

characterized in that

– each side brace is formed as a polyhedral object having wall plates (8,9; 10,11; 20,21; 22,23; 24,25) sloping towards each other differently

– including a diagonal surface (10, 11) sloping in from the back of the side brace towards the middle of the backrest

– having a total width of the side brace (6, 7) measured over its back (8, 9) which decreases from the lower end of the side brace (6, 7) towards the head end of the backrest frame, corresponding essentially to the external contour of the backrest

– and having a structural depth of the side brace measured over its side walls (20, 21 or 22, 23 respectively) which increases towards the lower end of the side brace.

2. Vehicle seat according to claim 1

characterized in that

– the pivot axis (26, 27) for the tilt adjustment of the backrest is located at the lower end of the side braces (6, 7) next to the back of the side braces,

– and that the points of linkage (28, 29) of the tilt adjustment device are positioned on the side braces (6, 7) at the lower end of the side braces next to the open side of the side braces.

## Revendications

1. Siège pour véhicule comprenant:

– un cadre de dossier

– qui présente des longerons latéraux ouverts (6, 7) disposés latéralement et 0 section sensiblement en forme de U,

– dont la partie dorsale fermée (8, 9) est tournée vers l'utilisateur du siège,

caractérisé en ce que:

– le longeron latéral (6, 7) est constitué sous forme d'un corps polygonal muni de surfaces de parois inclinées différemment les unes par rapport aux autres (8, 9; 10, 11; 20, 21 ou 22, 23; 24, 25),

– d'une surface inclinée (10, 11) disposée de façon inclinée à partir de la partie dorsale du longeron latéral jusqu'au milieu du dossier,

– dont la largeur totale de longeron latéral (6, 7) mesurée sur la partie dorsale (8, 9), décroît en partant de l'extrémité inférieure (6, 7) vers l'extrémité frontale du cadre de dossier, sensiblement comme le contour extérieur du dossier; et

– dont la profondeur de longeron latéral mesurée sur les parois latérales (20, 21 ou 22, 23), augmente en direction de l'extrémité inférieure du longeron latéral.

2. Siège pour véhicule selon la revendication 1,

caractérisé en ce que

– l'axe de pivotement (26, 27) du réglage d'inclinaison du dossier est disposé à l'extrémité inférieure du longeron latéral (6, 7), adjacent à la partie dorsale du longeron latéral,

– et en ce que les points d'articulation (28, 29) du dispositif de réglage d'inclinaison sont disposés à l'extrémité inférieure du longeron latéral, adjacents à la face ouverte du longeron latéral.

Fig. 1

Fig. 2